# EUROPÄISCHE PATENTSCHRIFT

(11) **EP 1 282 773 B1**
(45) Veröffentlichungstag und Bekanntmachung des Hinweises auf die Patenterteilung: **24.05.2006**
(21) Anmeldenummer: 01923621.5
(22) Anmeldetag: 02.03.2001
(51) Int. Cl.: F03D 7/04

(54) **WINDERNERGIEANLAGE MIT PARTIKELSENSOR**
WIND POWER PLANT WITH A PARTICLE SENSOR
EOLIENNE DOTEE D'UN CAPTEUR DE PARTICULES

(30) Priorität: 06.05.2000 DE 10022129
(43) Veröffentlichungstag der Anmeldung: 12.02.2003
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/002376
(87) Internationale Veröffentlichungsnummer: WO 2001/086142

(56) Entgegenhaltungen:
- WO-A-94/04820
- US-A- 5 313 202
- US-A- 5 474 261
- US-A- 5 748 091
- US-A- 5 900 821

## Beschreibung

Windenergieanlagen modernerer Technik sind seit längerem bekannt. Solche Windenergieanlagen verfügen über Rotoren, die wenigstens ein oder mehrere Rotorblätter aufweisen. Die Rotoren und mithin die von ihnen getragenen Rotorblättern von Windenergieanlagen sind im besonderen Maße den umgebenen Umwelteinflüssen wie z.B. Regen, Schnee, Hagel oder auch Insekten ausgesetzt. Vor allem die Vorderkanten der Rotorblätter werden hierbei stark beansprucht. Dabei kann es vorkommen, dass die Rotorblätter und insbesondere ihre Vorderkanten nach einiger Zeit (mechanische) Schäden aufweisen, für die eine kostenintensive Reparatur notwendig ist, zumal hierfür oftmals ein Kran benötigt wird und durch die Reparatur auch die gesamte Windenergieanlage für längere Zeit still steht und unter Umständen sogar einzelne Rotorblätter zur Reparatur transportiert werden müssen.

WO 94/04820 zeigt eine Windenergieanlage sowie ein Verfahren zum Steuern der Windenergieanlage. Die Windenergieanlage weist einen Temperatursensor zum Messen der Lufttemperatur auf, wobei die Windenergieanlage entsprechend der gemessenen Lufttemperatur gesteuert wird, indem die Struktur der Rotorblätter verändert wird.

US-A-5216 341 offenbart ein Stenerungssystem für die Scheibenwischeranlage eines Kraftfahzeugs, wobei das Stenerungssystem einen Sensor beinhaltet, der die Anzahl der Regentropfen ermittelt, die auf die Windschutzscheibe treffen.

Die o.g. Schäden sind auf Erosionsvorgänge zurückzuführen, die die Oberfläche - den sogenannten Gelcoat - der Rotorblätter beschädigen, was im Gegenzug zu einer Verschlechterung der aerodynamischen Eigenschaften der Blätter führt.

Es ist Aufgabe der vorliegen Erfindung, die Erosionsschäden an den Rotorblättern zu verringern und die vorgenannten Nachteile zu vermeiden.

Die Aufgabe wird erfindungsgemäß mit einem Verfahren mit den Merkmalen nach Anspruch 1 sowie einer Windenergieanlage zur Durchführung des Verfahrens nach Anspruch 4 gelöst. Vorteilhafte Weiterbildungen sind in den Unteransprüchen beschrieben.

Die Stärke des Einflusses von Witterungsbedingungen wie Regen, Schnee, Hagel oder auch Insekten auf die Rotorblattvorderkante ist im Wesentlichen von der Drehzahl der Windenergieanlage abhängig. Je schneller die Blätter drehen, desto höher ist die Geschwindigkeit der Rotorblattspitze und desto größer ist die Aufprallgeschwindigkeit von Partikeln wie beispielsweise Regentropfen, Hagelkörner, Schneeflocken, Insekten oder auch Staubkörnern - nachfolgend allgemein als Partikel bezeichnet - auf das Rotorblatt.

Windenergieanlagen nach dem Stand der Technik werden in der Regel unabhängig von der Witterung mit bestimmten Betriebskennlinien betrieben. Bei Anlagen mit variabler Drehzahl - wie beispielsweise die Windenergieanlagen der Firma Enercon vom Typ E-40 oder E-66 u.a. - bedeutet dies z.B. eine bestimmte anlagentypische Drehzahl-Leistungskennlinie.

Bei den heutigen Windenergieanlagen - vom vorgenannten Typ - der Größenordnung 500 kW bis 1,5 MW bewegen sich die maximalen Blattspitzengeschwindigkeiten im Bereich von 65 - 75 m/s doer entsprechend 234 - 270 km/h.

Der Erfindung liegt die Erkenntnis zugrunde, dass die größten Erosionsschäden an der Rotorblattvorderkante von Partikeln hervorgerufen werden, die auf die Rotorblattvorderkante treffen.

Erfindungsgemäß wird nunmehr vorgeschlagen, eine Windenergieanlage mit einem oder mehreren Sensoren auszustatten, die die jeweiligen (windunabhängigen) Witterungsbedingungen erfassen können und entsprechende Signale an die Windenergieanlagensteuerung geben, die entsprechend hierauf reagiert, indem sie beispielsweise bei starkem Regen - also bei hoher Partikelzahl innerhalb einer vorbestimmten Zeiteinheit (z.B. innerhalb von einer Minute) - die Drehzahl des Rotors der Anlage reduziert.

Mit dem erfindungsgemäßen Verfahren bzw. mit der erfindungsgemäßen Windenergieanlage lassen sich witterungsbedingte Erosionsschäden an der Windenergieanlage vermeiden bzw. drastisch reduzieren. Dies hat wiederum die Vermeidung teurer Rotorblattreparaturen zur Folge und darüberhinaus kann durch die Intakthaltung der Oberflächen der Rotorblätter ein gleichbleibender Wirkungsgrad der Windenergieanlage zur Verfügung gestellt werden. Die Erfindung ist nachfolgend anhand eines Ausführungsbeispiels näher erläutert.

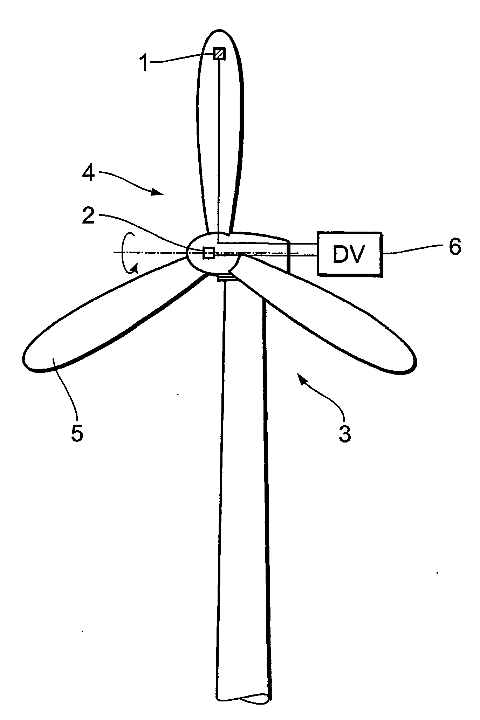

Die Figur zeigt - in Skizze - eine Windenergieanlage 3 mit einem Rotor 4, der drei Rotorblätter 5 aufweist. Auf der Rotorblattnabe 4 und/oder an den Rotorblättern 5 (der Vorderkante) sind Sensoren 1, 2 angebracht, die dort den Einfall von Partikeln, die mit dem Wind an die Windenergieanlage herangetragen werden, auf den Sensor messen. Der bzw. die Sensoren sind mit einer Datenverarbeitungseinrichtung 6 (PC) der Windenergieanlage verbunden, welche die gemessenen Daten auswertet und beispielsweise an ein entsprechendes Mengen/Zeitverhältnis setzt, das heißt, die Partikelzahl über einen bestimmten Zeitbereich erfasst. Treffen mehr als eine vorbestimmte Anzahl von Partikeln, z.B. 10 - 20 Partikel (Regentropfen) innerhalb einer bestimmten Zeiteinheit, z.B. 5 - 10 Sekunden auf einen Sensor, so wird mittels eines in der Datenverarbeitungseinrichtung gespeicherten Programms die Drehzahl der Windenergieanlage reduziert. Dies hat zwar auch eine Reduzierung der gesamten Leistung, die die Windenergie liefert, zur Folge. Da jedoch die Regenzeiten regelmäßig relativ kurz sind im Vergleich zu niederschlagsfreien Zeiten, fällt dies kaum ins Gewicht und es kann ein effektiver Schutz der Rotorblätter erreicht werden, wenn deren Drehzahl während der Niederschlagszeiten reduziert wird, beispielsweise halbiert wird.

Die Datenverarbeitungseinrichtung verarbeitetselbstverständlich wieüblicherweise auch die gemessenen Winddaten, die mit anderen Sensoren gemessen werden und leitet eine Reduktion der Drehzahl des Rotors erst dann ein, wenn die Windgeschwindigkeit eine vorbestimmten Wert überschreitet.

Mittels der Datenverarbeitungsanlage kann auch eine Messung der Partikelmenge , -geschwindigkeit und/oder -impulse (der sogenannten Niederschlagsenergie) vorgenommen werden, das heißt, die Niederschlagsleistung (Menge des Niederschlags (Partikel), Geschwindigkeit des Niederschlags) kann über einen bestimmten Zeitbereich erfasst (integriert) werden und die Reduzierung der Drehzahl wird dann eingeleitet, wenn die, Niederschlagsenergie bzw. Niederschlagsleistung einen vorbestimmten Wert überschreitet.

Auch kann mittels der Sensoren eine Addition bzw. Integration der Impulse (Masse eines Partikels multipliziert mit der Auftreffgeschwindigkeit des Partikels gemessen werden.

Wenn die von Partikeln hervorgerufenen Impulse in ihrer Höhe einen vorbestimmten Wert überschreiten, wird automatisch eine Drehzahlreduzierung vorgenommen, so dass dies auch automatisch eine Reduzierung der von den Niederschlägen hervorgerufenen Impulskräfte auf die Rotorblätter zur Folge hat.

## Patentansprüche

1. Verfahren zum Betreiben einer Windenergieanlage (3) mit wenigstens einem Sensor (1, 2) zum Erfassen der Zahl und/oder der Geschwindigkeit und/oder des Impulses von Partikeln, die auf den Sensor (1, 2) treffen, mit einer Datenverarbeitungs- und Steuereinrichtung (6) zur Verarbeitung der von dem Sensor (1, 2) erfassten Messdaten, wobei die Drehzahl des Rotors (4) der Windenergieanlage (3) mittels der Datenverarbeitungs-/Steuerungseinrichtung (6) reduziert wird und/oder die Windenergieanlage (3) stillgelegt wird, wenn ein vom Sensor (1, 2) gemessener Partikelmesswert einen vorbestimmten Partikelmesswert überschreitet.

2. Verfahren nach Anspruch 1, **dadurch gekennzeichnet, dass** die Drehzahl des Rotors (4) der Windenergieanlage (3) reduziert wird und dass die Windenergieanlage (3) stillgelegt wird, wenn innerhalb eines bestimmten Zeitbereichs eine bestimmte Anzahl von Partikeln vom Sensor (1, 2) gemessen worden ist.

3. Verfahren nach einem der vorhergehenden Ansprüche, **dadurch gekennzeichnet, dass** als Partikel Wassertropfen (Regentropfen) und/oder Hagelkörner und/oder Staubkörner gemessen werden.

4. Windenergieanlage (3) zur Durchführung des Verfahrens nach einem der vorhergehenden Ansprüche, mit wenigstens einem Sensor (1, 2) zum Erfassen der Zahl, der Geschwindigkeit und/oder des Impulses von Partikeln, die auf den Sensor (1, 2) treffen, wobei der Sensor (1, 2) mit einer Datenverarbeitungs- und Steuerungseinrichtung (6) verbunden ist, die von dem Sensor (1, 2) ermittelten Messdaten verarbeitet und die Drehzahl des Rotors (4) der Windenergieanlage (3) reduziert, gegebenenfalls die Windenergieanlage (3) stillgelegt, wenn ein vom Sensor (1, 2) gemessener Partikelmesswert einen vorbestimmten Partikelmesswert überschreitet.

5. Windenergieanlage (3) nach Anspruch 4, **dadurch gekennzeichnet, dass** die Windenergienalge eine Vielzahl von Sensor en (1, 2) zum Messen von Partikeln aufweist.

6. Windenergieanlage (3) nach einem der Ansprüche 4 oder 5, **dadurch gekennzeichnet, dass** der Sensor (1, 2) oder die Vielzahl von Sensor en (1, 2) an oder auf den Rotorblättern (5) der Windenergieanlage (3) angeordnet sind.

7. Windenergieanlage (3) nach einem der Ansprüche 4 bis 6, **dadurch gekennzeichnet, dass** ein Sensor (1, 2) die Zahl von auftreffenden Partikeln (pro Zeit) und/oder die Auftreffgeschwindigkeit von Partikeln auf den Sensor (1, 2) und/oder den Impulswert von auftreffenden Partikeln erfasst.

8. Windenergienalge nach einem der Ansprüche 4 bis 7, **dadurch gekennzeichnet, dass** der Sensor (1, 2) an der Vorderkante eines Rotorblattes (5) der Windenergieanlage (3) angeordnet ist.

9. Windenergieanlage (3) nach einem der Ansprüche, 4 bis 7, **dadurch gekennzeichnet, dass** wenigstens ein Sensor (1, 2) im Bereich der Rotorblattspitze, oder einem anderen Bereich der Windenergieanlage (3), z.B. der Gondel, angeordnet ist.

## Claims

1. A method for operating a wind turbine (3) having at least one sensor (1, 2) for detecting the number and/or the speed and/or the momentum of particles impinging on the sensor (1, 2), having a data-processing and control device (6) for processing the measurement data acquired by the sensor (1, 2), wherein the rotational speed of the rotor (4) of the wind turbine (3) is reduced by means of the data-processing / control device (6) and/or the wind turbine (3) is shut down when a particle measurement measured by the sensor (1, 2) exceeds a predetermined particle measurement.

2. A method according to claim 1, **characterised in that** the rotational speed of the rotor (4) of the wind turbine (3) is reduced and the wind turbine (3) is shut down when a certain number of particles has been measured by the sensor (1, 2) within a certain time range.

3. A method according to either of the preceding claims, **characterised in that** drops of water (raindrops) and/or hailstones and/or grains of dust are measured as the particles.

4. A wind turbine (3) for carrying out the method according to any one of the preceding claims, having at least one sensor (1, 2) for detecting the number, the speed and/or the momentum of particles impinging on the sensor (1, 2), wherein the sensor (1, 2) is connected to a data-processing and control device (6) which processes measurement data determined by the sensor (1, 2) and reduces the rotational speed of the rotor (4) of the wind turbine (3), where appropriate shuts down the wind turbine (3), when a particle measurement measured by the sensor (1, 2) exceeds a predetermined particle measurement.

5. A wind turbine (3) according to claim 4, **characterised in that** the wind turbine has a multiple number of sensors (1, 2) for measuring particles.

6. A wind turbine (3) according to either claim 4 or claim 5, **characterised in that** the sensor (1, 2) or the multiple number of sensors (1, 2) is or are disposed at or on the rotor blades (5) of the wind turbine (3).

7. A wind turbine (3) according to any one of claims 4 to 6, **characterised in that** a sensor (1, 2) detects the number of impinging particles (per time) and/or the speed of impingement of particles on the sensor (1, 2) and/or the value of the momentum of impinging particles.

8. A wind turbine according to any one of claims 4 to 7, **characterised in that** the sensor (1, 2) is disposed at the leading edge of a rotor blade (5) of the wind turbine (3).

9. A wind turbine (3) according to any one of claims 4 to 7, **characterised in that** at least one sensor (1, 2) is disposed in the region of the rotor blade tip or in another region of the wind turbine (3), for example the nacelle.

## Revendications

1. Procédé d'actionnement d'une éolienne (3) comprenant au moins un capteur (1, 2) destiné à détecter le nombre et/ou la vitesse et/ou l'impulsion des particules qui heurtent le capteur (1, 2), comprenant un système de traitement de données et de commande (6) destiné à traiter les données mesurées détectées par le capteur (1, 2), la vitesse de rotation du rotor (4) de l'éolienne (3) étant réduite au moyen du système de traitement de données/de commande (6) et/ou l'éolienne (3) étant arrêtée lorsqu'une valeur mesurée de particules, mesurée par le capteur (1, 2), dépasse une valeur mesurée de particules prédéfinie.

2. Procédé selon la revendication 1, **caractérisé en ce que** la vitesse de rotation du rotor (4) de l'éolienne (3) est réduite et **en ce que** l'éolienne (3) est arrêtée lorsqu'un nombre défini de particules a été mesuré par le capteur (1, 2) à l'intérieur d'une certaine plage temporelle.

3. Procédé selon l'une quelconque des revendications précédentes, **caractérisé en ce que** des gouttes d'eau (gouttes de pluie) et/ou des grêlons et/ou des grains de poussière sont mesurés comme particules.

4. Eolienne (3) destinée à réaliser le procédé selon l'une quelconque des revendications précédentes, comprenant au moins un capteur (1, 2) destiné à détecter le nombre, la vitesse et/ou l'impulsion des particules qui heurtent le capteur (1, 2), le capteur (1, 2) étant relié à un système de traitement de données et de commande (6) qui traite les données mesurées déterminées par le capteur (1, 2) et réduit la vitesse de rotation du rotor (4) de l'éolienne (3), arrête éventuellement l'éolienne (3) lorsqu'une valeur mesurée de particule, mesurée par le capteur (1, 2), dépasse une valeur mesurée de particule prédéfinie.

5. Eolienne (3) selon la revendication 4, **caractérisée en ce que** l'éolienne comprend une pluralité de capteurs (1, 2) destinés à mesurer les particules.

6. Eolienne (3) selon l'une quelconque des revendications 4 ou 5, **caractérisée en ce que** le capteur (1, 2) ou la pluralité de capteurs (1, 2) est(sont) disposé(s) sur les pales de rotor (5) de l'éolienne (3).

7. Eolienne (3) selon l'une quelconque des revendications 4 à 6, **caractérisée en ce qu'**un capteur (1, 2) détecte le nombre de particules incidentes (par heure) et/ou la vitesse d'impact des particules sur le capteur (1, 2) et/ou la valeur d'impulsion de particules incidentes.

8. Eolienne selon l'une quelconque des revendications 4 à 7, **caractérisée en ce que** le capteur (1, 2) est disposé sur l'arête avant d'une pale de rotor (5) de l'éolienne (3).

9. Eolienne (3) selon l'une quelconque des revendications 4 à 7, **caractérisée en ce qu'**au moins un capteur (1, 2) est disposé dans la zone de pointe de pale de rotor, ou une autre zone de l'éolienne (3), par exemple la nacelle.
